Europäisches Patentamt

European Patent Office

Office européen des brevets

(19)

(11) **EP 0 861 875 B1**

(12) **FASCICULE DE BREVET EUROPEEN**

(45) Date de publication et mention
de la délivrance du brevet:
**08.09.2004 Bulletin 2004/37**

(21) Numéro de dépôt: **98400343.4**

(22) Date de dépôt: **13.02.1998**

(51) Int Cl.[7]: **C08L 77/00**, C08L 77/06,
C08L 77/12
// (C08L77/00, 77:12, 51:06),
(C08L77/00, 77:12, 23:08),
(C08L77/00, 77:12, 87:00)

(54) **Compositions souples à base de polyamide et aptes à l'extrusion soufflage**

Weiche Zusammensetzungen auf Basis von Polyamid und geeignet zum Blasextrudieren

Flexible polymide compositions suitable for blow-extrusing moulding

(84) Etats contractants désignés:
**BE CH DE DK ES FR GB IE IT LI NL SE**

(30) Priorité: **26.02.1997 FR 9702304**

(43) Date de publication de la demande:
**02.09.1998 Bulletin 1998/36**

(73) Titulaire: **Atofina**
**92800 Puteaux (FR)**

(72) Inventeurs:
• **Bouilloux, Alain**
**27300 Bernay (FR)**

• **Teze, Laurent**
**27300 Bernay (FR)**

(74) Mandataire: **Neel, Henry**
**Atofina**
**D.C.R.D./D.P.I.**
**4, Cours Michelet**
**La Défense 10**
**92091 Paris La Défense Cedex (FR)**

(56) Documents cités:
**EP-A- 0 060 579        EP-A- 0 564 338**
**CH-A- 655 941          US-A- 5 140 065**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne des compositions à base de polyamide et aptes à l'extrusion soufflage. Elle concerne plus particulièrement des compositions souples comprenant une matrice en alliage de polyamide et de polymère à blocs polyamides et blocs polyether dans laquelle est dispersée une phase réticulée, lesdites compositions ayant un melt strengh supérieur à 1,5 et un module de flexion (à 23°C selon ISO 178-93) inférieur à 700 MPa et de préférence compris entre 50 et 300 MPa.

Le melt strengh est une mesure de l'aptitude d'un polymère ou d'un mélange de polymère à l'extrusion soufflage. On mesure le temps t2 que met la paraison pour descendre d'une hauteur de 25 cm et le temps t1 que met la paraison pour descendre d'une hauteur de 50 cm, le melt strengh est le rapport t1/t2. Si l'aptitude au soufflage de grandes pièces est bonne on trouve un rapport proche de 2. Au contraire si on s'éloigne de 2, par exemple 1,4, cette valeur traduit un fluage de la paraison sous son propre poids (accélération de la vitesse de descente) et donc une mauvaise aptitude à l'extrusion soufflage.

Les compositions de l'invention sont utiles pour fabriquer des pièces souples extrudées soufflées pour l'automobile en particulier les pièces situées sous le capot moteur qui doivent résister à la chaleur. Il s'agit par exemple de tuyaux du circuit de refroidissement, d'air conditionné, d'air de combustion de différentes gaines et protection de cables électriques. Beaucoup de ces pièces sont aujourd'hui en caoutchouc, c'est-à-dire des élastomères naturels ou synthétiques vulcanisés qu'on doit mettre en forme puis vulcaniser dans leur forme définitive. La vulcanisation se fait par batch dans des étuves ou des fours, les tuyaux par exemple doivent contenir un mandrin en une matière résistant à la température de vulcanisation. L'avantage des compositions de l'invention est qu'elles sont thermoplastiques il suffit donc de les extruder, les mettre en forme par soufflage et les laisser refroidir. Certaines conduites, par exemple les circuits d'admission d'air de combustion dans les moteurs d'automobile, sont constituées de parties rigides ou thermoplastiques et de parties souples en caoutchouc, toutes les parties étant raccordées par des colliers de serrage. L'avantage des compositions de l'invention est qu'on peut par une extrusion soufflage séquentielle extruder par exemple une partie en polyamide puis ensuite une partie selon les compositions de l'invention. Les deux parties se soudent à chaud bout à bout. On obtient ainsi une pièce extrudée soufflée constituée de différents matériaux l'un au moins étant une composition selon l'invention.

Dans le cas de conduites d'admission d'air on obtient ainsi une conduite pouvant être constituée de parties rigides et de parties souples fabriquées en une seule pièce sans raccords. La présente invention concerne aussi ces pièces.

Un autre avantage des compositions de l'invention est leur résistance au vieillissement thermique qu'on exprime par la durée de demi-vie. Généralement on utilise l'évolution de l'allongement à la rupture au cours du vieillissement en étuve sèche à 150°C.

L'autre avantage est la bonne tenue thermo-mécanique : si la pièce doit être souple dès la température ambiante (montage de l'installation), elle ne doit cependant pas fluer sous son propre poids quand la température atteint 120°C, 140°C voire 150°C.

L'art antérieur a déjà décrit des polyamides souples soit par incorporation de plastifiant dans le polyamide, soit par mélange avec des polyoléfines. Cependant, pour obtenir de faibles modules de flexion, il est nécessaire d'incorporer d'importantes quantités de plastifiant ou de polyoléfines ce qui entraîne soit l'exsudation du plastifiant et donc une perte de la souplesse, soit la perte de la matrice polyamide ou des mélanges qui n'ont plus de propriétés mécaniques ou qui sont difficilement transformables.

L'art antérieur a aussi décrit des mélanges à base de polymères comprenant des blocs polyamides et des blocs polyéther, cependant ils sont beaucoup trop élastomériques et n'ont plus les propriétés du polyamide.

La reprise en eau est plus faible que les polyamides souples de l'art antérieur.

La résistance aux chocs est très bonne ainsi que la tenue thermique. Ils présentent aussi une reprise élastique et une faible déformation remanente à la compression (DRC).

CH 655 941 décrit la nécessité d'ajouter des copolyoléfines greffées par de l'anhydride maléique à des copolymères à blocs polyamides ou à des mélanges de ces copolymères à blocs polyamide avec des polyamides pour les assouplir. Ces compositions de l'art antérieur ne sont pas à matrice polyamide.

US 5 070 145 décrit des mélanges de polyamide, de copolymères éthylène / acrylate d'alkyle et de copolymère éthylène / acrylate d'alkyle / anhydride maléique.

On améliore ainsi la résistance au choc des polyamides, toutefois ces compositions ne comprennent pas de copolymères à blocs polyamide et n'ont pas la souplesse des compositions de l'invention.

EP 564 338 décrit des mélanges de polyamide et de copolymères éthylène / acrylate d'alkyle / méthacrylate de glycidyle et éventuellement de copolymère éthylène / acrylate d'alkyle / anhydride maléique.

La partie non polyamide de ces mélanges peut donc être réticulée, ce qui permet d'augmenter sa quantité par rapport au polyamide et de baisser le module de flexion. L'ajout de copolymère à blocs polyamide n'est pas décrit.

Ainsi l'invention fournit des compositions comprenant une matrice en alliage de (a) polyamide et (b) de polymère à blocs polyamides et blocs polyether dans laquelle est dispersée une phase réticulée (c), lesdites compositions ayant un melt strengh supérieur à 1,5 et un module de flexion à 23°C (selon ISO 178-93) inférieur à 700 MPa et de préférence compris entre 50 et 300 MPa.

On utilise le terme "alliage" pour désigner la matrice formée de (a) et (b) en raison de la compatibilité particulièrement élevée de ces polymères.

On entend par polyamide (a) les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de certains de ces monomères ce qui conduit à des copolyamides, par exemple le PA-6/12 par condensation du caprolactame et du lauryllactame.

On peut utiliser des mélanges de polyamide. On utilise avantageusement le PA-6.

Les polymères à blocs polyamides et blocs polyéthers (b) résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne. Avantageusement, les blocs polyamides sont en polyamide-12 ou en polyamide-6.

La masse molaire en nombre $\overline{M}_n$ des séquences polyamides est comprise entre 300 et 15 000 et de préférence entre 600 et 5 000. La masse $\overline{M}_n$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25° C.

Que les blocs polyéthers dérivent du polyéthylène glycol, du polyoxypropylène glycol ou du polyoxytetraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol, du propylène glycol ou encore du tétraméthylène glycol.

De préférence, les blocs polyamide comprennent les mêmes motifs que le polyamide (a).

De préférence, le polymère à blocs polyamides et blocs polyéther comprend un seul type de bloc polyamide et un seul type de blocs polyéther. On utilise avantageusement des polymères à blocs PA-6 et blocs PTMG et des polymères à blocs PA-12 et blocs PTMG.

On peut aussi utiliser un mélange de deux polymères à blocs polyamides et blocs polyéther.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50 % en poids ou plus du polymère à blocs polyamide et blocs polyéther. Avantageusement, la quantité de polyamide et la quantité de polyéther sont dans le rapport (polyamide/polyéther) 50/50 à 80/20.

De préférence, les blocs polyamides et les blocs polyéther d'un même polymère (b) ont respectivement des masses Mn 1000/1000, 1300/650, 2000/1000, 2 600/650 et 4 000/1 000.

La phase réticulée (c) est le produit de réaction d'un polymère fonctionnalisé (C1) avec un produit au moins difonctionnel (C2) en présence éventuelle d'un catalyseur.

Les compositions de l'invention sont préparées à l'état fondu dans des extrudeuses ou des malaxeurs selon les techniques habituelles des thermoplastiques. Elles sont disponibles sous forme de granulés. Il suffit ensuite de fondre ces granulés par exemple dans une extrudeuse qui alimente un dispositif d'extrusion soufflage. On peut aussi préparer directement les compositions de l'invention en ajoutant les différents constituants (a), (b) et les précurseus de (c) dans une extrudeuse qui alimente le dispositif d'extrusion soufflage.

Dans ce dernier cas l'extrudeuse doit être adaptée aux conditions de mélange et de réaction des précurseurs de la phase réticulée (c).

Il est donc clair que les compositions de l'invention sont thermoplastiques.

Le polymère fonctionnalisé (C1) peut être un polymère avec des fonctions epoxy, acide carboxylique ou anhydride carboxylique et le produit difonctionnel (C2) peut être un produit ayant deux fonctions acide carboxylique, ou une fonction anhydride carboxylique et une fonction epoxyde, ou deux fonctions anhydride carboxylique ou deux fonctions epoxyde.

On ne sortirait pas du cadre de l'invention si (C2) était en partie estérifié pourvu qu'il reste suffisamment de fonctions pour former une phase (c) réticulée.

Selon une première forme de l'invention (C1) est soit un copolymère de l'éthylène et d'un epoxyde insaturé soit une polyolefine greffée par un epoxyde insaturé et (C2) est soit un copolymère de l'éthylène et d'un acide carboxylique insaturé ou d'anhydride carboxylique insaturé soit une polyolefine greffée par un acide carboxylique insaturé ou un anhydre carboxylique insaturé.

Selon une deuxième forme de l'invention (C1) est comme ci-dessus soit un copolymère de l'éthylène et d'un epoxyde insaturé soit une polyolefine greffée par un epoxyde insaturé et (C2) est un diacide carboxylique, un polyacide carboxylique ou un anhydride partiel ou total de ces acides.

Selon une troisième forme de l'invention (C1) est soit un copolymère de l'éthylène et d'un acide carboxylique insaturé ou d'un anhydride carboxylique insaturé soit une polyolefine greffée par un acide carboxylique insaturé ou un anhydride carboxylique insaturé et (C2) est un produit ayant deux fonctions epoxyde tel que par exemple le diglycidylether du bisphenol A (DGEBA).

S'agissant de la polyolefine greffée par un epoxyde insaturé on entend par polyolefine les polymères comprenant des motifs oléfines tels que par exemple des motifs éthylène, propylène, butène-1, ou tout autre alpha oléfine. A titre d'exemple, on peut citer

- les polyéthylènes tels que les LDPE, HDPE, LLDPE ou VLDPE, le polypropylène, les copolymères éthylène / propylène, les EPR (éthylène / propylène Rubber) ou encore les PE métallocènes,
- les copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylène-propylène / styrène, les éthylène / propylène / diène (EPDM) ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine qu'on greffe par l'epoxyde insaturé est choisie parmi le LLDPE, le VLDPE, le polypropylène, les copolymères éthylène / acétate de vinyle ou les copolymères éthylène /(méth)acrylate d'alkyle. La densité peut être avantageusement comprise entre 0,86 et 0,965, le Melt Flow index (MFI) peut être compris entre 0,3 et 40.

S'agissant des copolymères de l'éthylène et d'un epoxyde insaturé on peut citer par exemple les copolymères de l'éthylène d'un (meth)acrylate d'alkyle et d'un epoxyde insaturé ou les copolymères de l'éthylène, d'un ester vinylique d'acide carboxylique saturé et d'un epoxyde insaturé. La quantité d'epoxyde peut être jusqu'à 15 % en poids du copolymère et la quantité d'éthylène d'au moins 50 % en poids.

Avantageusement (C1) est un copolymère de l'éthylène d'un (meth)acrylate d'alkyle et d'un epoxyde insaturé.

De préférence le (meth)acrylate d'alkyle est tel que l'alkyle possède 2 à 10 atomes de carbone.

S'agissant de la première forme de l'invention (C2) peut être une polyolefine greffée par un acide carboxylique insaturé ou un anhydride carboxylique insaturé, la polyolefine peut être choisie parmi les polyolefines citées plus haut et devant être greffées par un epoxyde insaturé pour former (C1). (C2) peut être aussi un copolymère de l'éthylène et d'un acide carboxylique insaturé ou d'un anhydride carboxylique insaturé.

A titre d'exemples on peut citer les copolymères de l'éthylène d'un (meth)acrylate d'alkyle, d'un acide ou anhydride carboxylique insaturé et les copolymères de l'éthylène, d'un ester vinylique d'acide carboxylique saturé et d'un acide ou anhydride carboxylique insaturé.

La quantité d'acide ou d'anhydre carboxylique insaturé peut être jusqu'à 15 % en poids du copolymère et la quantité d'éthylène d'au moins 50 % en poids.

Avantageusement (C2) est un copolymère de l'éthylène d'un (meth)acrylate d'alkyle et d'un anhydride carboxylique insaturé. De préférence le (meth)acrylate d'alkyle est tel que l'alkyle possède 2 à 10 atomes de carbone.

Des exemples d'acrylate ou methacrylate d'alkyle utilisables comme constituants de (C1) et (C2) sont notamment le methacrylate de méthyle, l'acrylate d'éthyle, l'acrylate de n-butyle, l'acrylate d'isobutyle, l'acrylate de 2-éthylhexyle. Des exemples d'epoxydes insaturés utilisables comme constituants de (C1) sont notamment :

- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexène-I-glycidyléther, le cyclohexène-4,5-diglycidylcarboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Des exemples d'anhydrides d'acide dicarboxylique insaturé utilisables comme constituants de (C2) sont notamment l'anhydre maléique, l'anhydride itaconique, l'anhydride citraconique, l'anhydride tétrahydrophtalique.

Selon cette première forme de l'invention il est recommandé d'ajouter un catalyseur c'est-à-dire un produit capable d'accélérer la réaction entre la fonction epoxy présente dans (C1) et la fonction acide ou anhydride présente dans (C2).

Dans le cadre de la présente invention, il est avantageux que le catalyseur soit en quantité suffisante pour jouer efficacement son rôle de promoteur de la réticulation au moins partielle de la composition (C). La détermination de la quantité efficace de catalyseur est à la portée de l'homme de l'art, une fois fixées les préparations d'epoxyde dans (C1) et d'acide ou d'anhydride dans (C2).

Ces catalyseurs sont particulièrement utilisés pour les réactions entre les epoxy et les anhydrides.

Parmi les composés capables d'accélérer la réaction entre la fonction epoxy présente dans (C1) et la fonction anhydride ou acide présente dans (C2) on peut citer notamment :

- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine
- le 1,4-diazabicyclo[2,2,2]octane (DABCO)
- des phosphines tertiaires telles que la triphénylphosphine
- des alkyldithiocarbamates de zinc.
- des acides alpha omega aminocarboxyliques tels que par exemple $NH_2-(CH_2)_5COOH$, $NH_2-(CH_2)_{10}COOH$ et $NH_2(CH_2)_{11}-COOH$ et de préférence l'acide aminoundecanoïque.

La quantité est avantageusement de 0,1 à 3 % et de préférence 0,5 à 1,5 % en poids de (C1) + (C2)

La demanderesse, sans être liée par cette explication, croit que ces amino acides permettent de transformer une partie des anhydrides de (C2) en acides très réactifs avec l'epoxy.

Dans cette première forme de l'invention le melt index (ou indice de fluidité ou MI ou MFI) de (C1) et (C2) peut être par exemple compris entre 0,3 et 20 à 190°C / 2,16 kg.

S'agissant de la deuxième forme de l'invention (C2) peut être choisi parmi les acides polycarboxyliques aliphatiques, alicycliques ou aromatiques, leurs anhydrides partiels ou totaux.

A titre d'exemples d'acides aliphatiques on peut citer l'acide succinique, l'acide glutarique, l'acide pimélique, l'acide azélaique, l'acide sebacique, l'acide adipique, l'acide dodecanedicarboxylique, l'acide octadecanedicarboxylique, l'acide dodecenesuccinique et l'acide butanetetracarboxylique.

A titre d'exemples d'acides alicycliques on peut citer l'acide cyclopentanedicarboxylique, l'acide cyclopentanetricarboxylique, l'acide cyclopentanetetracarboxylique, l'acide cyclohexane dicarboxylique, l'acide hexane tricarboxylique, l'acide methylcyclopentane dicarboxylique, l'acide tetrahydrophtalique, l'acide endométhylènetetrahydrophtalique et l'acide méthylèndométhylènetetrahydrophtalique.

A titre d'exemples d'acides aromatiques on peut citer l'acide phtalique, l'acide isophtalique, l'acide terephtalique, l'acide trimellilique, l'acide trimesique, l'acide pyromellitique.

A titre d'exemples d'anhydrides on peut citer les anhydrides partiels ou totaux des acides précédents.

On utilise avantageusement l'acide adipique.

Dans cette deuxième forme de l'invention le melt index de (C1) peut être compris entre 0,3 et 20 à 190°C / 2,16 kg.

S'agissant de la troisième forme de l'invention (C1) est le polymère (C2) de la première forme de l'invention et est avantageusement un copolymère de l'éthylène, d'un (meth)acrylate d'alkyle et d'un anhydride carboxylique insaturé.

La proportion de (C1) et (C2) nécessaires pour former la phase réticulée (C) est déterminée selon les règles habituelles de l'art par le nombre de fonctions réactives présentes dans (C1) et dans (C2).

Par exemple la proportion de (C2) est telle que le nombre de fonctions acides soit de 0,5 à 1,5 pour une fonction epoxyde. Si (C2) contient des fonctions anhydrides sa proportion est telle qu'il y ait 0,5 à 1,5 fonction anhydride pour une fonction epoxyde.

Par exemple s'agissant de la première forme de l'invention si (C1) est un copolymère de l'éthylène d'un (meth) acrylate d'alkyle et d'un epoxyde insaturé et (C2) un copolymère de l'éthylène, d'un (meth)acrylate d'alkyle et d'un anhydride d'acide carboxylique insaturé les proportions sont telles que le rapport entre les fonctions anhydride et les fonctions epoxy soit voisin de 1.

S'agissant de la deuxième forme de l'invention si (C1) est un copolymère de l'éthylène, d'un (meth)acrylate d'alkyle et d'un epoxyde insaturé et (C2) un diacide carboxylique les proportions sont telles qu'il y ait une fonction acide pour une fonction epoxyde.

Avantageusement le polymère (C2) de la première forme de l'invention et le polymère (C1) de la troisième forme de l'invention ont des fonctions anhydrides hydrolysées ou sont un mélange d'un polymère à fonction acide et d'un polymère à fonction anhydride.

On ne sortirait pas du cadre de l'invention si la phase (C) contenait une polyolefine non réticulée. Cette polyolefine peut être choisie parmi les polyolefines citées plus haut.

Les proportions des différents constituants (a), (b) et (c) sont telles que a + b + c = 100. (a) et (b) sont indiscernables et forment la matrice c'est-à-dire (a+b) / (a+b+c) > 0,45 et de préférence 0,5 < (a + b) / (a+b+c) < 0,65.

Le module de flexion augmente quand (c) diminue.

Les proportions de (b) dans (a) + (b) permettent de faire varier le module de flexion, plus la proportion de (b) est élevée plus le module de flexion est bas (les autres valeurs étant constantes).

(b) / (a + b) peut être compris entre 0,1 et 0,9 et de préférence de 0,3 à 0,75.

Des compositions particulièrement utiles sont celles ayant un module de flexion (à 23°C ISO 178-93) entre 100 et 300 MPa.

Le melt strengh est avantageusement supérieur à 1,6 et de préférence compris entre 1,7 et 2. Le melt strengh est déterminé à la température d'extrusion choisie pour les compositions. Habituellement cette température est entre 225 et 245°C.

La résistance au vieillissement thermique est déterminée en mesurant l'allongement à la rupture d'éprouvettes de traction ayant séjourné des temps variables en étuve sèche sous air à 150°C. La forme des éprouvettes (Iso R 527-B) et l'allongement rupture mesuré correspondent à l'application de la norme Iso R 527:93 pour une vitesse de traction de 50 mm/minute. la procédure suivie est la suivante :

- Injection des éprouvettes suivi d'un séchage à 60°C sous vide pendant 48 heures.
- Les éprouvettes nécessaires à la détermination de l'allongement à la rupture initial sont mises en conditionnement 2 jours / 23°C / 50 % d'HR avant traction.
- Les éprouvettes nécessaires à l'étude du vieillissement sont mises en place en étuve sèche à 150°C sous air directement après séchage.
- Prélèvement à des temps de vieillissement donnés des éprouvettes à tester et mise en conditionnement (48 heures / 23°C / 50 % HR) avant mesure de l'allongement rupture.
- L'allongement obtenu est rapporté à l'allongement initial d'une éprouvette n'ayant pas subi le vieillissement à 150°C pour obtenir l'allongement rupture en relatif en fonction de la durée du vieillissement.

Des compositions avantageuses sont telles que (a) est le PA-6 (b) un copolymère à blocs PA-6 et blocs PTMG (c) est la réticulation d'un copolymère (C1) de l'éthylène, d'un (meth)acrylate d'alkyle et du (meth)acrylate de glycidyle avec un copolymère (C2) de l'éthylène, d'un (meth)acrylate d'alkyle et de l'anhydride maléique. De préférence une partie de (C2) est remplacée par un copolymère éthylène / acide (méth)acrylique ou éthylène / (méth)acrylate d'alkyle / acide (méth)acrylique.

Parmi ces compositions on préfère celles ayant un melt strengh compris entre 1,7 et 2. On préfère aussi celles ayant un module de flexion entre 50 et 250 MPa.

Ces compositions de l'invention peuvent aussi comprendre des charges, des ignifugeants, des agents glissants ou antiblocants, des anti-oxydants, des anti-U.V.

La présente invention concerne aussi des objets extrudés soufflés comprenant au moins une partie (1) constituée des compositions souples de l'invention et au moins une autre partie (2) constituée essentiellement soit de polyamide soit de polyolefine soit d'un mélange de polyamide et polyolefine et différent des compositions de la partie (1), les parties (1) et (2) étant soudées l'une à l'autre (par fusion) à leur surface de contact.

Exemples :

On désigne les produits utilisés de la manière suivante :

Amino 11 = acide aminoundecanoïque

PA 1 = Polyamide 6 de MFI compris entre 17 et 20 (sous 235°C / 2,16 kg).

PA 2 = Polyamide 6 de MFI 1,5 à 3 (sous 235°C / 2,16 kg).

PEBAX 1 : Copolymère à blocs PA6 de Mn 1300 et blocs de PTMG de Mn 650 ayant une dureté Shore D de 56 et une viscosité intrinsèque de 1,38 mesurée dans le méta crésol à 25°C pour une concentration initiale de 0,8 g/100 ml.

VLDPE = Polyéthylène de basse densité linéaire (d=0,900) et MFI 0,8 (mesuré sous 190°C / 2,16 kg).

Lotader 1 : Copolymère éthylène / acrylate de butyle / anhydride maléique de composition pondérale 79,2 / 17,7 / 3,1 et de MFI 4,5 (mesuré sous 190°C / 2,16 kg).

Lotader 2 : Copolymère éthylène / acrylate d'éthyle / anhydride maléique de composition pondérale 70,9/27,6/1,5 et de MFI 7 (mesuré sous 190°C / 2,16 kg).

Lotader 3 : Copolymère éthylène / acrylate de méthyle / méthacrylate de glycidyle de composition pondérale 64,2 / 28 / 7,8 et de MFI 7 (mesuré sous 190°C / 2,16 kg).

ANTI 51 désigne l'IRGANOX 1098 de CIBA.

ANTI 82 désigne l'HOSTANOX PAR 24 de HOECHST.

EXL 3611 = Additif core-shell acrylique ayant à sa surface des groupes réactifs avec le PA6 et le Pebax.

XX1275 désigne un accélérateur de réticulation de type dimethylsuifamine (DMS) sous forme de mélange maître MM dans du LOTADER 2.

Lucalène 3110 = Copolymère éthylène / acrylate de butyle / acide acrylique de composition en poids 88/8/4 (BASF).

XX1325 : DABCO sous forme de mélange maître dans du LOTADER 2 (80/20).

MM noir: Mélange maître de noir dans du VLDPE.

Les exemples du tableau 1 ci-joint illustrent ce que l'on peut faire et obtenir selon l'invention. L'exemple **comparatif 1** constitue la base de référence pour ce qui concerne le "melt strength" et la résistance au vieillissement thermique, alors que son module de flexion est encore trop élevé pour les applications envisagées. Les exemples proposés sont réalisés sur extrudeuse Werner 40.

**Comparatif 1 :** Exemple de référence pour la réalisation de formulations souples en associant uniquement PA6 et phase polyoléfinique réticulée (deux Lotader réagissant l'un avec l'autre). La phase polyoléfine qui représente 50% en poids de l'ensemble est constituée d'un terpolymère d'éthylène-acrylate d'éthyle-anhydride maléique d'un terpolymère d'éthylène-acrylate de méthyle-méthacrylate de glycidyle et d'un catalyseur (DMS) de la réaction anhydride maléique / méthacrylate de glycidyle (ce dernier se trouvant sous forme de granulés de mélange maître (MM) de DMS dans du Lotader 2). Les quatre types de granulés (Lotader 2 + Lotader 3 + MM + PA6) sont introduits sous forme de dry-blend ou par quatre doseurs indépendants dans la trémie d'une extrudeuse double vils corotative Werner Pfleiderer de diamètre 40 mm, L/D = 40 (9 fourreaux + 4 entretoises soit une longueur totale de 10 fourreaux). Le débit total de l'extrudeuse est de 50 kg/heure et la vitesse de rotation vis de 150 tr/min. Les températures matière à l'entrée des fourreaux 4, 6, 8 et en tête sont respectivement de 260°C, 230°C, 235°C et 255°C. Les joncs extrudés sont granulés puis étuvés sous vide 8 heures à 80°C et enfin conditionnés en sacs étanches.

On injecte ensuite des barreaux de dimensions 80 x 10 x 4mm pour la mesure du module de flexion à 23°C (selon norme Iso 178-93) après un conditionnement de 14 jours à 50% d'humidité relative et 23°C. Le module mesuré pour cet exemple comparatif 1 est de 400 MPa.

- La résistance au vieillissement thermique de cet exemple comparatif 1 est bonne. Il est possible d'estimer à 360 heures la durée de 1/2 vie (définie comme étant le temps au bout duquel le rapport ci-dessus est égal à 0,5) de cet échantillon (tableau 1, comparatif 1).

L'aptitude à l'extrusion-soufflage résulte de la mise en place d'un véritable test d'extrusion sur une machine d'extrusion-soufflage de type SERTA ESH 2 munie d'une vis PE de diamètre 50 mm et de L/D = 24. Il s'agit d'une extrudeuse monovis qui alimente en continu une tête d'extrusion munie d'un outillage divergent Poinçon / Filière de diamètre respectifs 52 et 50 mm. Pour un profil de températures fourreaux et tête affiché de 210°C/220°C/230°C/235°C/235°C (ce qui correspond à une température matière de 237°C ici) et une vitesse de vis de 30 tr/minute, on mesure le temps que met la paraison pour descendre d'une hauteur de 25 cm (t2 du tableau 1) et d'une hauteur de 50 cm (t1 du tableau 1). Le "melt strength" est défini comme étant le rapport t1 / t2. Si l'aptitude au soufflage de grandes pièces est bonne, on trouvera un rapport proche de 2. Au contraire, si on s'éloigne de 2 (1,4 par exemple), cette valeur traduit un fluage de la paraison sous son propre poids (accélération de la vitesse de descente) et une mauvaise aptitude à l'extrusion soufflage. Pour cet exemple comparatif 1, le melt strength est de 1,65 (à 237°C) ce qui est considéré comme une bonne aptitude à l'extrusion-soufflage.

Comparatif 2 :Cet exemple comparatif illustre des PA6 + Pebax + Polyoléfine + Polyoléfine fonctionnelle. On procède tel que dans le comparatif 1, avec cependant les changement suivants; une partie du PA6 et remplacée par du PEBAX, le mélange de Lotader réactifs est remplacé par un simple mélange polyéthylène de basse densité et Lotader. On introduit dans l'extrudeuse par l'intermédiaire de quatre doseurs pondéraux indépendants (ou par simple pré mélange à sec des différents granulés) le Polyamide 6, le Pebax, le polyéthylène de très basse densité et le Lotader. Le débit total de l'extrudeuse est de 50 kg/heure et la vitesse de rotation vis de 150 tr/min. Les températures matière au niveau des fourreaux 4, 6, 8 et en tête sont respectivement de 250°C, 240°C, 245°C et 240°C. Les joncs extrudés sont granulés puis étuvés sous vide 8 heures à 80°C.

Cet exemple comparatif 2 se caractérise par un module de flexion bas (206 MPa), ce qui est recherché. Cependant, son temps de 1/2 vie à 150°C est limité (140 heures) et par ailleurs le "melt strength" (mesuré comme pour comparatif 1 mais à 225°C) est de 1,3 (matériau inadapté pour le soufflage de grandes pièces).

Comparatif 3 :Idem comparatif 2. Toutes conditions étant égales par ailleurs, on abaisse de 1% les quantités de Pébax, PA6 et VLDPE pour pouvoir introduire dans la composition 3% en poids d'EXL 3611 (Additif core-shell acrylique possédant à sa surface des groupements réactifs vis à vis du PA6 et du Pébax). L'introduction de cet additif permet d'accroître par réaction sur la matrice la viscosité de fusion à bas gradient de cisaillement. Le "melt-strength" s'en trouve amélioré (1,36 à 230°C pour comparatif 3 contre 1,3 à 225°C pour comparatif 2) mais reste insuffisant pour l'extrusion de grandes pièces. Par ailleurs, module de flexion et vieillissement thermique sont équivalents à comparatif 2.

Comparatif 4, 5 et 6 et Exemples 1 à 4 :Pour les Comparatifs et exemples qui vont suivre, nous utilisons la même extrudeuse de compoundage que précédemment, avec cependant quelques modifications dans les paramètres de fonctionnement. Ceux-ci sont résumés dans le tableau ci-dessous. Par ailleurs, pour ces essais les granulés obtenus sont étuvés 16 heures à 70°C sous vide avant ensachage et utilisation ultérieure.

| Exemples | Comp. 4 | Comp. 5 | Comp. 6 | Ex. 1 | Ex. 2 | Ex. 3 | Ex. 4 |
|---|---|---|---|---|---|---|---|
| Temp. Mat. F4 | 235 | 230 | 230 | 230 | 220 | 225 | 220 |
| Temp. Mat. F6 | 255 | 245 | 245 | 245 | 240 | 250 | 245 |
| Temp. Mat. F8 | 250 | 250 | 250 | 250 | 245 | 250 | 250 |
| Temp. Mat. Tête | 265 | 260 | 260 | 260 | 260 | 255 | 260 |
| Vit. vis | 200 | 200 | 200 | 200 | 200 | 200 | 200 |
| Débit en kg/h | 50 | 50 | 50 | 50 | 50 | 50 | 50 |

(Temp. Mat. F4 = Température Matière à l'entrée du fourreau 4)

Comparatif 4 :Idem comparatif 3. On introduit dans la composition 2% en poids d'EXL 3611 (Additif core-shell acrylique possédant à sa surface des groupements réactifs) et on remplace le PA6 de comparatif 1, 2 et 3 par un PA6 plus visqueux.

Le "melt strength" est mesuré sur la même machine Serta que les Comparatifs 1, 2 et 3 mais avec un outillage divergent Poinçon / Filière de diamètre respectifs 15 et 20 mm, un profil de températures fourreaux et tête affiché de 230°C/240°C/255°C/250°C/245°C (ce qui correspond à une température matière de 240°C) et une vitesse de vis de 30 tr/minute. Le "melt-strength" se trouve sensiblement amélioré (1,36 à 230°C pour comparatif 3 contre 1,4 à 240°C pour comparatif 4) mais reste encore insuffisant pour l'extrusion de grandes pièces.

**Comparatif 5 :**Toutes conditions étant égales par ailleurs, Idem Comparatif 4 sauf que les 32% en poids de polyéthylène de basse densité et les 8% de Lotader 1 sont remplacés par 40% en poids de Lotader 1. L'EXL 3611 (Additif core-shell acrylique possédant à sa surface des groupements réactifs) et par ailleurs maintenu dans la formulation. Le "melt strength" est mesuré sur la même machine Serta et les mêmes conditions que pour Comparatif 4 (outillage divergent Poinçon / Filière de diamètre respectifs 15 et 20 mm, profil de températures fourreaux et tête affiché de 230°C/240°C/255°C/250°C/245°C (ce qui correspond à une température matière de 240°C) et une vitesse de vis de 30 tr/minute). Le "melt-strength" se trouve sensiblement amélioré (1,45 à 240°C pour comparatif 5 contre 1,4 à 240°C pour comparatif 4) mais reste encore insuffisant pour l'extrusion de grandes pièces.

**Comparatif 6 :**Toutes conditions étant égales par ailleurs, Idem Comparatif 5 sauf que les taux respectifs de PA6 et de Pebax passent de respectivement 25 et 35% en poids à 40 et 20% en poids. L'EXL 3611 (Additif core-shell acrylique possédant à sa surface des groupements réactifs) et par ailleurs maintenu dans la formulation. Le "melt strength" est mesuré sur la même machine Serta et les mêmes conditions que pour Comparatif 5. Le "melt-strength" se trouve sensiblement amélioré (1,5 à 240°C pour comparatif 6 contre 1,45 à 240°C pour comparatif 5) mais reste encore insuffisant pour l'extrusion de grandes pièces.

**Exemple 1** : Dans ce premier exemple permettant d'illustrer l'invention, on associe une matrice constituée de PA6 + Pebax (Comparatif 2 à 6), à une phase polyoléfinique réticulée constituée du mélange de Lotader réactifs telle que décrite en Comparatif 1. Module de flexion (ici 197 MPa) et "melt strength" (ici 1,94) ont été déterminés dans les mêmes conditions que pour Comparatif 4, 5 et 6. Par rapport aux exemples comparatifs, cet exemple 1 associe à la fois souplesse et très bonne aptitude à l'extrusion-soufflage.

**Exemples 2 à 4 :**Nous procédons à l'identique de l'exemple 1 sauf que nous faisons varier le taux de polyoléfine (50% en poids pour exemples 2 et 4, 40% en poids pour exemple 3) et/ou le ratio PA6/Pebax (voir tableau 1). Les produits issus de ces exemples sont à la fois souples (module de flexion < à 200 MPa), adaptés pour l'extrusion-soufflage ("melt strength" > à 1,8) et résistants au vieillissement thermique (durée de 1/2 vie > à 400 heures pour les exemples 3 et 4 en particulier.

Nous démontrons ci-dessous que les formules selon l'invention présentent une meilleure tenue thermo-mécanique. Ceci est mesuré par une mesure en fonction de la température (entre -140°C et + 240°C) du module élastique dynamique E' (conditions : sollicitation en tension à une fréquence dynamique de 10 rad/sec sur un appareil de type RSA2, après un conditionnement préalable des éprouvettes de 14jours/23°C/50%HR.)

| Exemples | Comparatif 2 | Comparatif 6 | Exemple 1 |
|---|---|---|---|
| Module à 20°C (Pa) | 2.9 E8 | 2.2 E8 | 2.4 E8 |
| Module à 120°C (Pa) | 6.4 E7 | 2.2 E7 | 7.4 E7 |
| Rapport E20°C / E120°C | 4.5 | 10 | 3.2 |

Le rapport du module à 20°C sur le module à 120°C permet de montrer un moindre évolution de l'exemple 1 (ratio = 3.2), malgré des souplesses à température ambiante équivalentes proches de 200 MPa.

## Exemples A à H :

Le débit de l'extrudeuse est 50 kg/h. Les résultats sont sur le tableau 2 ; les quantités sont en poids.

Microscopie (MEB) : "inversion matrice" veut dire que c'est une matrice polyéthylène (LOTADER), "co continu" veut dire que c'est une matrice PA-PEBAX et une phase dispersée réticulée continue.

Le module de flexion est mesuré à sec à 23°C. Après un conditionnement à 23°C 14 jours à 50 % d'humidité relative les modules des exemples D, E et F baissent de 485 à 200, de 466 à 198 et de 487 à 242 MPa.

Le MFI (235°C 5 kg) a été mesuré sur les produits non étuvés, on indique le % d'eau.

"Aspect soufflet" : on a fabriqué des soufflets par extrusion soufflage.

| | Comparatif 1 | Comparatif 2 | Comparatif 3 | Comparatif 4 | Comparatif 5 |
|---|---|---|---|---|---|
| PA 1 = Polyamide PA6 | 50 | 25 | 24 | | |
| PA 2 = Polyamide PA6 | | | | | |
| PEBAX 1 | | | | 25 | 25 |
| VLDPE | | 35 | 34 | 35 | 35 |
| Lotader 1 | | 32 | 31 | 32 | |
| Paraloïd EXL 3611 | | 8 | 8 | 8 | 40 |
| Total (Lot. 2 + Lot. 3 + XX1275 (75/22/3)) | | | 3 | 2 | 2 |
| Anti 51 | 50 | | | | |
| Anti 82 | 1 | 1 | 1 | 1 | 1 |
| MFI (235°C / 2,16 kg) après 1 nuit / 80°C / vide | 0,4 | 0,4 | 0,4 | 0,4 | 0,4 |
| MFI (235°C / 5 kg) après 1 nuit / 80°C / vide | | 4,3 | 2,5 | 2,6 | 2,4 |
| MFI (235°C / 10 kg) après 1 nuit / 80°C / vide | 2 - 1.7 | | | 9,1 | 10,4 |
| Melt Strength (avec température matière associée) | 6,2 | | | | |
| t1 (50 cm) | 1.65 (237°C) | 1.3 (225°C) | 1.36 (230°C) | 1.4 (240°C) | 1.45 (240°C) |
| t2 (25 cm) | 15,3 | 29,8 | 35 | 23 | 23,7 |
| Module de flexion à 23°C (Iso 178-93) en MPa | 9,3 | 22,9 | 25,6 | 16,4 | 16,3 |
| Dureté Iso 868 à 23°C (Shore D instantanée) | 400 | 206 | 200 | 176 | 205 |
| Dureté Iso 868 à 23°C (Shore D à 5 secondes) | | 57,7 | 57,5 | 59,2 | 60,8 |
| Dureté Iso 868 à 23°C (Shore D à 15 secondes) | 56 | 52,4 | 51 | 53,4 | 55,2 |
| Vieillissement en étuve sèche sous air à 150°C | 55 | 51,3 | 50 | 51,8 | 53,4 |
| Allongement à la rupture (en relatif / Allong. initial) | | | | | |
| 0 heure | 1,00 | 1,00 | 1,00 | | |
| 24 h | | 0,70 | 1,06 | | |
| 46 h | | | | | |
| 48 h | | 0,72 | 0,68 | | |
| 90 h | | 0,77 | 0,64 | | |
| 95 h | | | | | |
| 174 h | 0,71 | | | | |
| 190 h | | 0,20 | 0,28 | | |
| 261 h | | | | | |
| 483 h | | | | | |
| 500 h | 0,37 | | | | |
| 816 h | | | | | |
| 1000 h | 0,05 | | | | |
| Durée de 1/2 à 150°C (L/Lo = 0,50) | 360 h | 140 h | 140 h | | |

Tableau 1

| | Comparatif 6 | Exemple 1 | Exemple 2 | Exemple 3 | Exemple 4 |
|---|---|---|---|---|---|
| PA 1 = Polyamide PA6 | | | | | |
| PA 2 = Polyamide PA6 | 40 | 40 | 33 | 25 | 21 |
| PEBAX 1 | 20 | 20 | 17 | 35 | 29 |
| VLDPE | | | | | |
| Lotader 1 | 40 | | | | |
| Paraloïd EXL 3611 | 2 | | | | |
| Total (Lot. 2 + Lot. 3 + XX1275 (75/22/3)) | | 40 | 50 | 40 | 50 |
| Anti 51 | 1 | 1 | 1 | 1 | 1 |
| Anti 82 | 0.4 | 0.4 | 0.4 | 0.4 | 0.4 |
| MFI (235°C / 2,16 kg) après 1 nuit / 80°C / vide | 1.8 | | | | |
| MFI (235°C / 5 kg) après 1 nuit / 80°C / vide | 8.4 | | | | |
| MFI (235°C / 10 kg) après 1 nuit / 80°C / vide | | 3.2 | 1.1 | 4.4 | 2.3 |
| Melt Strength (avec température matière associée) | 1.5 (240°C) | 1.94 (240°C) | 1.9 (240°C) | 1.83 (240°C) | 1.95 (240°C) |
| t1 (50 cm) | 20,9 | 15 | 13,6 | 13,2 | 14,8 |
| t2 (25 cm) | 14 | 7,8 | 7,1 | 7,2 | 7,6 |
| Module de flexion à 23°C (Iso 178-93) en MPa | 211 | 197 | 129 | 137 | 105 |
| Dureté Iso 868 à 23°C (Shore D instantanée) | 61,2 | 61,4 | 59,4 | 60,2 | 56,2 |
| Dureté Iso 868 à 23°C (Shore D à 5 secondes) | 55,6 | 55,6 | 51 | 51 | 47,4 |
| Dureté Iso 868 à 23°C (Shore D à 15 secondes) | 54,6 | 54,6 | 49,6 | 49,6 | 45,2 |
| Vieillissement en étuve sèche sous air à 150°C | | | | | |
| Allongement à la rupture (en relatif / Allong. initial) | | | | | |
| 0 heure | | | 1,00 | 1,00 | 1,00 |
| 24 h | | | | | |
| 46 h | | | 0,73 | 0,84 | 0,80 |
| 48 h | | | | | |
| 90 h | | | | | |
| 95 h | | | 0,63 | 0,77 | 0,68 |
| 174 h | | | | | |
| 190 h | | | | | |
| 261 h | | | 0,48 | 0,60 | 0,69 |
| 483 h | | | 0,29 | 0,43 | 0,46 |
| 500 h | | | | | |
| 816 h | | | 0,13 | 0,21 | 0,34 |
| 1000 h | | | | | |
| Durée de 1/2 à 150°C (L/Lo = 0,50) | | | 230 h | 400 h | 440 h |

Tableau 1 (suite)

EP 0 861 875 B1

| Exemples | H | A | B | C | D | E | F | G |
|---|---|---|---|---|---|---|---|---|
| PA 2 | 39 | 39 | 39 | 39 | 39 | 39 | 39 | 39 |
| Pebax 1 | 19.57 | 19.57 | 19.57 | 19.57 | 19.57 | 19.57 | 19.57 | 19.57 |
| Lotader 2 | 29.27 | 30.2 | 30 | 30.05 | 30 | 20.22 | | 20.22 |
| Lotader 3 | 8.59 | 8.43 | 8.53 | 8.78 | 8.63 | 8.7 | 8.7 | 8.4 |
| xx1275 (MM avec DMS) | 1.17 | | | | | | | |
| xx1325 (MM avec DABCO) | | 0.4 | 0.5 | | | | | 0.3 |
| Amino 11 | | | | 0.2 | 0.4 | | | |
| Lucalene 3110 | | | | | | 10.11 | 30.33 | 10.11 |
| MM noir | 1 | 1 | 1 | 1 | 1 | 1 | 1 | 1 |
| Anti 51 | 1 | 1 | 1 | 1 | 1 | 1 | 1 | 1 |
| Anti 82 | 0.4 | 0.4 | 0.4 | 0.4 | 0.4 | 0.4 | 0.4 | 0.4 |
| | | 1 % dabco | 1.28 % dabco | 0.5 % a11 | 1 % a11 | 1/3 lucalène sans cata | 100 % lucalène sans cata | 1/3 lucalène avec cata |
| Microscopie (MEB) Module de Flexion à SEC (en MPa) | Inversion matrice | co continu | co continu | co continu | co continu 485 | co continu 466 | co continu 487 | co continu |
| MFI 235°C Kg non étuvé | 0.4 | 0.8 | 1 | 1.8 | 1 | 0.6 | 0.5 | 0.5 |
| % eau | 0.41 | 0.41 | 0.2 | 0.27 | 0.31 | 0.38 | 0.45 | 0.15 |
| Température matière F4 | 256 | 262 | 269 | 273 | 272 | 272 | 277 | 269 |
| Aspect soufflet Melt Strength | 1.8 | bel aspect 1.8 | bel aspect 1.78 | bel aspect 1.7 | bel aspect 1.8 | excellent 1.87 | bel aspect 1.84 | excellent 1.9 |

**tableau 2**

**EP 0 861 875 B1**

**Revendications**

1. Compositions comprenant une matrice en alliage de (a) polyamide et (b) de polymère à blocs polyamide et blocs polyether dans laquelle est dispersée une phase réticulée (c), lesdites compositions ayant un melt strengh supérieur à 1,5 et un module de flexion à 23°C (selon ISO 178-93) inférieur à 700 MPa et de préférence compris entre 50 et 300 MPa.

2. Compositions selon la revendication 1 dans lesquelles (c) est le produit de réaction d'un polymère fonctionnalisé (C1) avec un produit (C2) au moins difonctionnel.

3. Compositions selon la revendication 2 dans lesquelles (C1) est soit un copolymère de l'éthylène et d'un epoxyde insaturé soit une polyolefine greffée par un epoxyde insaturé et (C2) est soit un copolymère de l'éthylène et d'un acide ou d'un anhydride carboxylique insaturé soit une polyolefine greffée par un acide ou un anhydride carboxylique insaturé.

4. Compositions selon la revendication 2 dans lesquelles (C1) est soit un copolymère de l'éthylène et d'un epoxyde insaturé soit une polyolefine greffée par un epoxyde insaturé et (C 2) est un diacide carboxylique, un polyacide carboxylique ou un anhydride partiel ou total de ces acides.

5. Compositions selon l'une quelconque des revendications précédentes dans lesquelles les proportions des constituants sont a+b+c = 100 - (a+b) / (a+b+c) > 0,45 et de préférence $0,5 \leq (a+b) / (a+b+c) \leq 0,65$.

6. Compositions selon l'une quelconque des revendications précédentes dans lesquelles $0,1 \leq b / (a+b) \leq 0,9$ et de préférence $0,3 \leq b / (a+b) \leq 0,75$.

7. Compositions selon l'une quelconque des revendications précédentes dans lesquelles le melt strengh est compris entre 1,7 et 2.

8. Compositions selon l'une quelconque des revendications précédentes dans lesquelles le module de flexion (à 23°C selon ISO 178-93) est compris entre 100 et 300 MPa.

9. Compositions selon l'une quelconque des revendications 1 à 7 dans lesquelles :

   (a) est le PA-6
   (b) un copolymère à blocs PA-6 et blocs polytetraméthylène glycol (PTMG)
   (c) est la réticulation d'un copolymere (C1) de l'éthylène, d'un (meth)acrylate d'alkyle et du (meth)acrylate de glycidyle avec un copolymère (C2) de l'éthylène, d'un (meth)acrylate d'alkyle et de l'anhydride maléique, et Le melt strengh est compris entre 1,7 et 2.

10. Objets extrudés soufflés comprenant au moins une partie (1) constituée des compositions de l'une quelconque des revendications précédentes et au moins une autre partie (2) constituée essentiellement soit de polyamide soit de polyolefine soit d'un mélange de polyamide et de polyolefine et différent des compositions de la partie (1), les parties (1) et (2) étant soudées l'une à l'autre à leur surface de contact.

**Patentansprüche**

1. Zusammensetzungen, welche eine Matrize aus einer Legierung aus (a) Polyamid und (b) Polymer mit Polyamidblöcken und Polyetherblöcken umfassen, in welcher eine vernetzte Phase (c) dispergiert ist, wobei die Zusammensetzungen eine Schmelzfestigkeit von mehr als 1,5 und bei 23 °C (gemäß ISO 178-93) ein Biegemodul von weniger als 700 MPa und vorzugsweise zwischen 50 und 300 MPa aufweisen.

2. Zusammensetzungen nach Anspruch 1, wobei (c) das Reaktionsprodukt eines funktionalisierten Polymers (C1) mit einem mindestens difunktionellen Produkt (C2) ist.

3. Zusammensetzungen nach Anspruch 2, wobei (C1) entweder ein Copolymer aus Ethylen und einem ungesättigten Epoxid oder ein durch ein ungesättigtes Epoxid aufgepropftes Polyolefin und (C2) entweder ein Copolymer aus Ethylen und einer Säure oder einem ungesättigten Carboxyanhydrid oder einem durch eine Säure oder ein ungesättigtes Carboxyanhydrid aufgepropftes Polyolefin ist.

4. Zusammensetzungen nach Anspruch 2, wobei (C1) entweder ein Copolymer aus Ethylen und einem ungesättigten Epoxid oder ein durch ein ungesättigtes Epoxid aufgepropftes Polyolefin und (C2) eine zweiwertige Carbonsäure, eine mehrwertige Carbonsäure oder ein teilweises oder vollständiges Anhydrid dieser Säuren ist.

5. Zusammensetzungen nach einem der vorhergehenden Ansprüche, wobei die Verhältnisse der Bestandteile gleich a+b+c = 100 - (a+b)/(a+b+c) > 0,45 und vorzugsweise 0,5 < (a+b)/(a+b+c)< 0,65 sind.

6. Zusammensetzungen nach einem der vorhergehenden Ansprüche, wobei 0,1 < b/(a+b) < 0,9 und vorzugsweise 0,3 < b/(a+b) < 0,75 gilt.

7. Zusammensetzungen nach einem der vorhergehenden Ansprüche, wobei die Schmelzfestigkeit zwischen 1,7 und 2 liegt.

8. Zusammensetzungen nach einem der vorhergehenden Ansprüche, wobei das Biegemodul (bei 23 °C gemäß ISO 178-93) zwischen 100 und 300 MPa liegt.

9. Zusammensetzungen nach einem der Ansprüche 1 bis 7, wobei:

(a) PA-6 ist,

(b) ein Copolymer mit PA-6-Blöcken und Polytetramethylenglycol-Blöcken (PTMG) ist,

(c) die Vernetzung eines Copolymers (C1) aus Ethylen, einem Alkyl(meth)acrylat und einem Glycidyl(meth) acrylat mit einem Copolymer (C2) aus Ethylen, aus einem Alkyl(meth)acrylat und einem Maleinsäureanhydrid ist, und

wobei die Schmelzfestigkeit zwischen 1,7 und 2 liegt.

10. Blasextrudierte Objekte, welche mindestens einen Teil (1), der aus Zusammensetzungen von einem der vorhergehenden Ansprüchen besteht, und mindestens einen anderen Teil (2) umfassen, der im Wesentlichen entweder aus Polyamid oder aus Polyolefin oder aus einer Mischung von Polyamid und Polyolefin besteht, die sich von den Zusammensetzungen des ersten Teils (1) unterscheidet, wobei die Teile (1) und (2) auf ihren Kontaktflächen miteinander verschweißt sind.


**Claims**

1. Compositions comprising a matrix of an alloy of (a) polyamide and (b) polymer having polyamide blocks and polyether blocks, dispersed in which matrix is a crosslinked phase (c), the said compositions having a melt strength of more than 1.5 and a flexural modulus at 23EC (in accordance with ISO 178-93) of less than 700 MPa and preferably between 50 and 300 MPa.

2. Compositions according to Claim 1 in which (c) is the product of reaction of a functionalized polymer (C1) with an at least difunctional product (C2).

3. Compositions according to Claim 2 in which (C1) is either a copolymer of ethylene and an unsaturated epoxide or a polyolefin grafted with an unsaturated epoxide and (C2) is either a copolymer of ethylene and an unsaturated carboxylic acid or anhydride or a polyolefin grafted with an unsaturated carboxylic acid or an unsaturated carboxylic anhydride.

4. Compositions according to Claim 2 in which (C1) is either a copolymer of ethylene and an unsaturated epoxide or a polyolefin grafted with an unsaturated epoxide and (C2) is a dicarboxylic acid, a polycarboxylic acid or a partial or total anhydride of these acids.

5. Compositions according to any one of the preceding claims, in which the proportions of the constituents are a+b+c = 100 - (a+b)/(a+b+c) > 0.45 and preferably 0.5 # (a+b)/(a+b+c) # 0.65.

6. Compositions according to any one of the preceding claims, in which 0.1 # b/(a+b) # 0.9 and preferably 0.3 # b/(a+b) # 0.75.

7. Compositions according to any one of the preceding claims, in which the melt strength is between 1.7 and 2.

8. Compositions according to any one of the preceding claims, in which the flexural modulus (at 23EC in accordance with ISO 178-93) is between 100 and 300 MPa.

9. Compositions according to any one of Claims 1 to 7, in which:

(a) is PA 6
(b) is a copolymer having PA 6 blocks and polytetramethylene glycol(PTMG) blocks
(c) is the crosslinking of a copolymer (C1) of ethylene, an alkyl (meth)acrylate and glycidyl (meth)acrylate with a copolymer (C2) of ethylene, an alkyl (meth)acrylate and maleic anhydride, and the melt strength is between 1.7 and 2.

10. Extrusion blow-moulded articles comprising at least one part (1) consisting of compositions of any one of the preceding claims and at least one other part (2) essentially consisting alternatively of polyamide or of polyolefin or of a mixture of polyamide and polyolefin and being different from the compositions of part (1), the parts (1) and (2) being welded to one another at their contact surface.